# EUROPÄISCHE PATENTSCHRIFT

(11) **EP 2 705 314 B1**
(45) Veröffentlichungstag und Bekanntmachung des Hinweises auf die Patenterteilung: **01.02.2017**
(21) Anmeldenummer: 12717326.8
(22) Anmeldetag: 30.04.2012
(51) Int. Cl.: F25D 23/06

(54) **KÄLTEGERÄT, INSBESONDERE HAUSHALTSKÄLTEGERÄT**
REFRIGERATOR, IN PARTICULAR DOMESTIC REFRIGERATOR
APPAREIL FRIGORIFIQUE, NOTAMMENT APPAREIL FRIGORIFIQUE DOMESTIQUE

(30) Priorität: 06.05.2011 DE 102011075388
(43) Veröffentlichungstag der Anmeldung: 12.03.2014
(73) Patentinhaber: BSH Hausgeräte GmbH, 81739 München (DE)
(72) Erfinder: LANZINGER, Jürgen, 89160 Dornstadt (DE); ZIMMERMANN, Martin, 89073 Ulm (DE); FANG, Shizeng, 89537 Giengen (DE)
(86) Internationale Anmeldenummer: PCT/EP2012/057904
(87) Internationale Veröffentlichungsnummer: WO 2012/152610

(56) Entgegenhaltungen:
- DE-A1-102008 026 528
- JP-A- 5 157 446
- JP-A- 61 116 273
- JP-A- S63 204 088

## Beschreibung

Die Erfindung betrifft ein Kältegerät nach dem Oberbegriff des Patentanspruches 1 sowie ein Verfahren zur Herstellung eines solchen Kältegerätes nach dem Patentanspruch 9. Zur Steigerung der Energieeffizienz eines solchen Kältegerätes können in der aufgeschäumten Isolationsschicht zwischen den Geräteaußenwänden und dem, den Kühlraum definierenden Innenbehälter Vakuumisolationspaneele angeordnet sein. Ein derartiges Vakuumisolationspaneel kann mittels eines Klebebandes innenseitig an der Geräteaußenwand vorpositioniert werden. Anschließend kann das Vakuumisolationspaneel beim Isolierschäumen fest in der Isolierschicht integriert werden.

Aus der DE 10 2008 026 528 A1 ist ein gattungsgemäßes Kältegerät bekannt, dessen Gehäuse und/oder Gerätetür jeweils innere und äußere Begrenzungswände sowie eine zwischen diesen durch Aufschäumen erzeugte Wärmeisolationsschicht aufweisen. Das Vakuumisolationspaneel wird in einem Vorschäum-Schritt in die Wärmeisolationsschicht eingebracht. Hierzu wird die äußere Gehäusewand in ein Formwerkzeug eingelegt. Auf der Innenseite der äußeren Gehäusewand wird dann ein Flüssighaftmittel aufgetragen, auf das das Vakuumisolationspaneel lose aufgelegt wird. Das auf dem Flüssighaftmittel aufgelegte Vakuumisolationspaneel ist randseitig durch einen ebenfalls auf dem Formwerkzeug liegenden Formrahmen begrenzt. Anschließend wird die Oberseite des Formrahmens mit einer Deckplatte so lange schaumdicht abgeschlossen, bis das Flüssighaftmittel im Vorschäum-Schritt aufgeschäumt und ausgehärtet ist.

Bei dem aus der DE 10 2008 026 528 A1 bekannten Vorschäum-Schritt kommt das aufgeschäumte Flüssighaftmittel zwangsläufig in Kontakt mit dem Formrahmen und/oder der Deckplatte des Formwerkzeugs, wodurch sich zwischen dem Formwerkzeug und dem aufgeschäumten Flüssighaftmittel eine Haftverbindung ergibt, die eine Entformung des vorgeschäumten Verbundkörpers, bestehend aus der Gehäuseaußenwand und dem Vakuumisolationspaneel, fertigungstechnisch nachteilig beeinträchtigt. 1

Die Dokumente JP S63204088 A und JP 5157446 A offenbaren Kältegeräte mit Vakuumisolationspaneel.

Die Aufgabe der Erfindung besteht darin, ein Kältegerät, insbesondere Haushaltskältegerät, sowie ein Verfahren zu dessen Herstellung bereitzustellen, das insbesondere bei einer Großserienproduktion einen fertigungstechnisch einwandfreien Zusammenbau des Kältegerätes ermöglicht.

Unter einem Kältegerät wird insbesondere ein Haushaltskältegerät verstanden, also ein Kältegerät das zur Haushaltsführung in Haushalten oder eventuell auch im Gastronomiebereich eingesetzt wird, und insbesondere dazu dient Lebensmittel und/oder Getränke in haushaltsüblichen Mengen bei bestimmten Temperaturen zu lagern, wie beispielsweise ein Kühlschrank, ein Gefrierschrank, eine Kühlgefrierkombination, eine Gefriertruhe oder ein Weinlagerschrank.

Die Aufgabe ist durch die Merkmale des Patentanspruches 1 oder des Patentanspruches 9 gelöst. Bevorzugte Weiterbildungen der Erfindung sind in den Unteransprüchen offenbart.

Die Erfindung betrifft ein Kältegerät mit einem, den Kühlraum definierenden Gehäuse und einer Gerätetür. Das Gehäuse und/oder die Gerätetür können jeweils innere und äußere Begrenzungswände sowie eine zwischen diesen, durch Aufschäumen erzeugte Wärmeisolationsschicht aufweisen. In der Wärmeisolationsschicht ist ein Vakuumisolationspaneel eingebracht. Eine erste der beiden Begrenzungswände kann zusammen mit dem Vakuumisolationspaneel und einem Flüssighaftmittel zu einem Verbundkörper beziehungsweise zu einer Vormontageeinheit zusammengefügt werden. Dabei kann das Flüssighaftmittel in einen ersten, der Isolierschäumung vorgeschalteten Vorschäum-Schritt aufgeschäumt und ausgehärtet werden, um im Verbundkörper einen festen Bauteilverbund zu erzielen. Die Erfindung geht von dem Sachverhalt aus, dass im Vorschäum-Schritt das aufgeschäumte Flüssighaftmittel in Kontakt mit dem Formwerkzeug gelangt und an diesem haftet. Um eine solche Haftverbindung zwischen dem Formwerkzeug und dem aufgeschäumten Flüssighaftmittel zu vermeiden, ist ein Trennmittel vorgesehen, dass das Flüssighaftmittel schaumdicht nach außen hin abtrennt. Das Flüssighaftmittel bleibt daher während des Vorschäum-Schrittes berührungsfrei mit Bezug auf das Formwerkzeug, wodurch die nach dem Vorschäum-Schritt erfolgende Entformung fertigungstechnisch problemlos durchführbar ist. Anstelle eines Vakuumisolationspaneels kann auch jegliches anderes Isolierelement verwendet werden.

Nach dem Vorschäum-Schritt erfolgt ein Isolierschäum-Schritt, bei dem zwischen der ersten und zweiten Begrenzungswand eine noch flüssige Wärmeisolationsschicht eingebracht, aufgeschäumt und anschließend ausgehärtet wird. Das Trennmittel kann einen umlaufenden Rahmen aufweisen, der einen mit dem Flüssighaftmittel gefüllten Zwischenraum zwischen dem Vakuumisolationspaneel und der ersten Begrenzungswand seitlich umgibt. Dabei sind während des Vorschäum-Schrittes sowohl die erste Begrenzungswand als auch das gegenüberliegende Vakuumisolationspaneel schaumdicht in Anlage mit dem umlaufenden Rahmen des Trennmittels. Das Trennmittel kann bevorzugt wannenförmig mit einem Boden und randseitig hochgezogenen Seitenwänden ausgebildet sein. Die Seitenwände des wannenförmigen Trennmittels bilden den oben genannten Rahmen, der den Zwischenraum zwischen dem Vakuumisolationspaneel und der ersten Begrenzungswand seitlich umschließt.

Wie bereits oben erwähnt, kann im Vorschäum-Schritt die erste Begrenzungswand und das Vakuumisolationspaneel zusammen mit dem Flüssighaftmittel zu einem festen Bauteilverbund zusammengefügt werden. Anschließend kann der Bauteilverbund einer Schäumungsanlage zugeführt werden, in der in einem Isolierschäum-Schritt die noch flüssige Ausgangskomponente der Wärmeisolationsschicht zwischen die innere und äußere Begrenzungswand eingebracht, aufgeschäumt und ausgehärtet wird. Nach dem Isolierschäum-Schritt weist der erfindungsgemäße Materialaufbau die beiden Begrenzungswände auf, von denen an der Innenseite der ersten Begrenzungswand der oben dargelegte Verbundkörper befestigt ist. In dem so gebildeten Verbundkörper kann das Vakuumisolationspaneel um eine Schichtdicke von der ersten Begrenzungswand beabstandet sein und/oder in Anlage mit dem Boden des wannenförmigen Trennmittels sein. Zudem kann der Rahmen des Trennmittels, insbesondere die Seitenwände des wannenförmigen Trennmittels schaumdicht in Anlage mit der ersten Begrenzungswand sein. Bei der Durchführung des Vorschäum-Schrittes definiert somit das wannenförmige Trennmittel eine Schäumungskammer in der das Flüssighaftmittel aufschäumt, ohne in Kontakt mit dem Formwerkzeug zu gelangen.

In dem, mit Flüssighaftmittel gefüllten Zwischenraum zwischen dem Vakuumisolationspaneel und der ersten Begrenzungswand kann zudem eine Kältegerätekomponente, insbesondere ein Verflüssiger, angeordnet sein. Die Kältegerätekomponente kann dabei vollständig in dem aufgeschäumten Flüssighaftmittel integriert sein. Der Verflüssiger ist Bestandteil eines an sich bekannten Kältemittelkreislaufes, mit dem dem Kühlraum Wärme entzogen wird, die über den Verflüssiger an die Umgebung abgegeben wird. Der Verflüssiger ist dabei bevorzugt in Kontakt mit der Innenseite der Gehäuseaußenwand, um eine günstige Wärmekopplung zu erzielen. Damit der Verflüssiger weitgehend thermisch vom Kühlraum entkoppelt ist, ist das Vakuumisolationspaneel zwischen dem Verflüssiger und dem Kühlraum eingebracht.

In der Zusammenbaulage ist die Wärmeisolationsschicht über das Trennmittel von dem Flüssighaftmittel entkoppelt. Demgegenüber können am Boden des wannenförmig gestalteten Trennmittels zumindest eine Durchtrittsöffnung beziehungsweise mehrere Lochreihen vorgesehen sein, die beim Isolierschäumen einen Schaumdurchtritt der Wärmeisolationsschicht ermöglichen, wodurch die Wärmeisolationsschicht unmittelbar in Haftverbindung mit dem Vakuumisolationspaneel gebracht wird. Dadurch kann die Bauteilstabilität des Gehäuses zusätzlich verbessert werden. Die im Boden des wannenförmiges Trennmittels vorgesehene Durchtrittsöffnung kann vom Vakuumisolationspaneel überdeckt sein. Auf diese Weise ist gewährleistet, dass die Wärmeisolationsschicht zwar in Haftverbindung mit dem Vakuumisolationspaneel gelangt, jedoch trotzdem außer Verbindung mit dem Flüssighaftmittel bleibt.

Zur Vorbereitung des oben genannten Vorschäum-Schrittes kann zunächst das Vakuumisolationspaneel unter Zwischenlage des Trennmittels in ein Formwerkzeug/Schäumungswerkzeug eingelegt werden. Auf der vom Formwerkzeug abgewandten Seite des Vakuumisolationspaneels wird dann das Flüssighaftmittel in noch flüssiger Form aufgetragen. Darauffolgend wird die erste Begrenzungswand schaumdicht auf den oberen Rand des Trennmittels aufgesetzt, wodurch sich eine nach außen hin schaumdicht abgedichtete Schäumungskammer ergibt. Die Schäumungskammer bleibt so lange schaumdicht geschlossen, bis das Flüssighaftmittel aufgeschäumt und ausgehärtet ist. Im nachfolgenden Entformungs-Schritt wird der so gebildete Verbundkörper vom Formwerkzeug entfernt. Da das Flüssighaftmittel nach außen hin abgetrennt ist, entsteht erfindungsgemäß keine Haftverbindung zwischen dem Flüssighaftmittel und dem Formwerkzeug, so dass der Entformungsvorgang problemlos durchführbar ist.

Nach erfolgtem Vorschäum-Schritt ist daher das Trennmittel nach außen freigelegt. Gegebenenfalls kann das freigelegte Trennmittel nach dem Vorschäum-Schritt vom Verbundkörper abgezogen werden. Das bereits aufgeschäumte Flüssighaftmittel sowie das Vakuumisolationspaneel sind daher freigelegt. Dadurch kann unter Umständen eine Haftverbindung zwischen der im Isolierschaum-Schritt aufgeschäumten Wärmeisolationsschicht und dem Verbundkörper gesteigert werden.

Die vorstehend erläuterten und/oder in den Unteransprüchen wiedergegebenen vorteilhaften Aus- und/oder Weiterbildungen der Erfindung können - außer zum Beispiel in den Fällen eindeutiger Abhängigkeiten oder unvereinbarer Alternativen - einzeln oder aber auch in beliebiger Kombination miteinander zur Anwendung kommen.

Die Erfindung und ihre vorteilhaften Aus- und Weiterbildungen sowie deren Vorteile werden nachfolgend anhand von Zeichnungen näher erläutert.

Es zeigen:
- Fig. 1: in einer perspektivischen Darstellung ein Kältegerät mit einem in eine Seitenwand eingeschäumten Verflüssiger;
- Fig. 2: eine Schnittdarstellung entlang der Schnittebene I-I aus der Fig. 1;
- Fig. 3 bis 6: jeweils Ansichten, die ein Verfahren zur Herstellung des Kältegeräte-Gehäuses gemäß dem ersten Ausführungsbeispiel veranschaulichen; und
- Fig. 7 und 8: jeweils Ansichten entsprechend der Fig. 3 bis 5 zur Veranschaulichung eines Herstellungsverfahrens gemäß einem zweiten Ausführungsbeispiel.

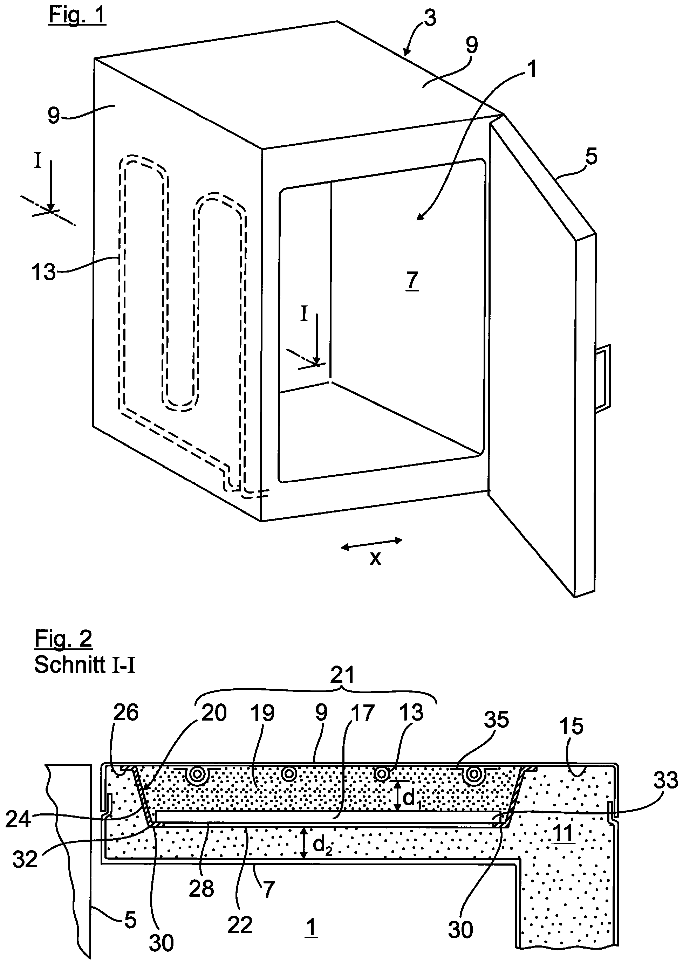

In der Fig. 1 ist ein Kältegerät mit einem, einen Kühlraum 1 definierenden Gehäuse 3 sowie einer daran seitlich angelenkten Gerätetür 5 gezeigt. Das Kältegeräte-Gehäuse 3 weist einen Kunststoff-Innenbehälter 7 sowie Geräteaußenwände 9 auf, zwischen denen jeweils eine, durch Aufschäumen erzeugte Wärmeisolationsschicht 11 eingebracht ist. In gleicher Weise ist auch die Gerätetür 5 wärmeisolierend aufgebaut, die jeweils eine Innenverkleidung und eine Außenverkleidung mit dazwischenliegender Wärmeisolationsschicht aufweist. Zudem ist in einer, in der Fig. 1 in der Geräteseitenrichtung x vorderen Seitenwand des Gehäuses 3 ein Verflüssiger 13 vorgesehen, dessen mäanderförmig verlaufende Verflüssiger-Rohrleitung zwischen dem Innenbehälter 7 und der Geräteaußenwand 9 in der Wärmeisolationsschicht 11 eingeschäumt ist. Der Verflüssiger 13 ist zusammen mit weiteren Komponenten Bestandteil eines an sich bekannten Kältemittelkreislaufes und gibt im Kältebetrieb die dem Kühlraum 1 entzogene Wärme an die Umgebung ab.

In der Fig. 2 ist der Materialaufbau der Seitenwand des Gehäuses 3 in einer Schnittdarstellung gezeigt. Demzufolge ist die Verflüssiger-Rohrleitung 13 unmittelbar in Anlage mit der Innenseite 15 der Geräteaußenwand 9. Mit einer Schichtdicke d₁ davon beabstandet ist ein Vakuumisolationspaneel 17 vorgesehen, das planparallel zwischen der Geräteaußenwand 9 und der inneren Seitenwand des Innenbehälters 7 angeordnet ist. Mit Hilfe des Vakuumisolationspaneels 17 wird der Verflüssiger 13 thermisch vom Kühlraum 1 entkoppelt. Wie aus der Fig. 2 weiter hervorgeht, ist die Geräteaußenwand 9, der Verflüssiger 13 sowie das Vakuumisolationspaneel 17 mit Hilfe eines aufgeschäumten Flüssighaftmittels 19 zu einem Verbundkörper 21 zusammengefügt. Der Verbundkörper 21 bildet eine Vormontageeinheit, die bereits vor dem Zusammenbau mit dem Innenbehälter 7 hergestellt wird.

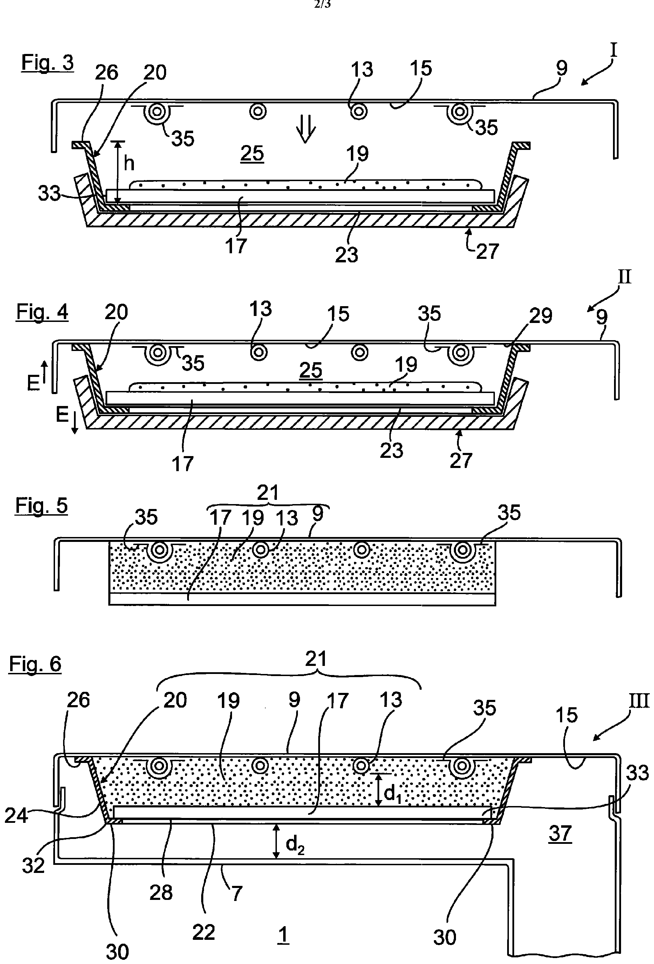

Zusätzlicher Bestandteil der Vormontageeinheit 21 ist ein wannenförmig gestaltetes Trennmittel 20, das einen Boden 22 aufweist, von dem randseitig schräg nach außen gestellte Seitenwände 24 hochgezogen sind, die das aufgeschäumte Flüssighaftmittel 19 seitlich begrenzen. Auf diese Weise ist das Flüssighaftmittel 19 schaumdicht von der Wärmeisolationsschicht 11 abgetrennt. Die rahmenartig umlaufenden Seitenwände 24 weisen einen flanschartig nach außen abragenden Randsteg 26 auf, der mit der Innenseite 15 der Gehäuseaußenwand 9 schaumdicht in Anlage ist. Im Boden 22 des wannenförmigen Trennmittels 20 ist darüberhinaus eine großflächige Durchtrittsöffnung 28 vorgesehen, die beim Aufschäumen der Wärmeisolationsschicht 11 einen Schaumdurchtritt ermöglicht. Dadurch ist gewährleistet, dass die Wärmeisolationsschicht 11 zwar in Haftverbindung mit der Unterseite des Vakuumisolationspaneels 17 gelangt und dennoch außer Verbindung mit dem Flüssighaftmittel 19 verbleibt. Gemäß der Fig. 2 ist die Durchtrittsöffnung 28 derart großflächig gestaltet, dass lediglich ein randseitig umlaufender Stützabschnitt 30 (Fig. 3) des Bodens 22 verbleibt, auf dem eine Randzone 33 des Vakuumisolationspaneels 17 abgestützt ist und der gemäß der Fig. 2 an einer Übergangskante 32 in die umlaufenden Seitenwände 24 übergeht.

In den Fig. 3 bis 6 wird das Verfahren zur Herstellung der Vormontageeinheit 21 erläutert. Gemäß der Fig. 3 wird in einem ersten Verfahrensschritt I das wannenförmige Trennmittel 20 in ein formangepasstes Formwerkzeug 27 gelegt. Anschließend wird auf den Boden 22 des Trennmittels 20 das Vakuumisolationspaneel 17 abgelegt, das die Durchtrittsöffnung 28 im Boden 22 des Trennmittels 20 überdeckt. Auf seiner, dem Formwerkzeug 27 abgewandten Seite wird die flüssige Ausgangskomponente des Flüssighaftmittels 19 auf das Vakuuminsolationspaneel 17 aufgetragen. Das wannenförmige Trennmittel 20 begrenzt innenseitig eine Schäumungskammer 25. Diese wird zur Vorbereitung eines folgenden Vorschäum-Schrittes II schaumdicht geschlossen, indem die Geräteaußenwand 9 mit ihrer Innenseite 15 auf den oberen Randsteg 26 der Seitenwände 24 des Trennmittels 20 schaumdicht aufgelegt wird. In der nunmehr schaumdicht geschlossenen Schäumungskammer 25 wird dann das Flüssighaftmittel 19 unter Druckaufbau aufgeschäumt und ausgehärtet. Anschließend wird der so gebildete Verbundkörper 21 und das Formwerkzeug 27 in den mit Pfeilen dargestellten Entformungsrichtungen E auseinander bewegt (Fig. 4). Da aufgrund des wannenförmigen Trennmittels eine Haftverbindung zwischen dem Flüssighaftmittel 19 und dem Formwerkzeug 27 vermieden ist, erfolgt der Entformungsvorgang problemlos. Das Formwerkzeug 27 wirkt also in den Fig. 3 bis 8 lediglich als ein Niederhalter, der nicht unmittelbar in Kontakt mit dem Flüssighaftmittel 19 kommt und die Schäumungskammer 25 nicht unmittelbar begrenzt.

Die Höhe h der schräg hochgezogenen Seitenwände 24 des Trennmittels 20 definiert die Höhe des gebildeten Verbundkörpers 21. Wie aus den Fig. 3 bis 5 zudem hervorgeht, ist die Verflüssiger-Rohrleitung 13 über Klebebänder 35 an der Innenseite 15 der Gehäuseaußenwand vorpositioniert, um eine dichte Anlage an der Gehäuseaußenwand 9 zu gewährleisten. Die Verflüssiger-Rohrleitung 13 wird im Vorschäum-Schritt II durch Aufschäumen des Flüssighaftmittels 19 im Zwischenraum zwischen der Geräteaußenwand 9 und dem Vakuumisolationspaneel 17 fest integriert.

Nach der Herstellung des in der Fig. 5 gezeigten Verbundkörpers 21 wird dieser zur Vorbereitung eines Isolierschäum-Schritts III (Fig. 6) in einer Schäumungsanlage mit dem Innenbehälter 7 zusammengefügt. Das Vakuumisolationspaneel 17 ist in der Fig. 6 bereits lagerichtig mit vordefinierter Schichtdicke d₂ positioniert. Anschließend erfolgt eine Isolierschäumung, bei der in den noch freien Hohlraum 37 eine flüssige Ausgangskomponente der Wärmeisolationsschicht 11 eingebracht und anschließend aufgeschäumt wird.

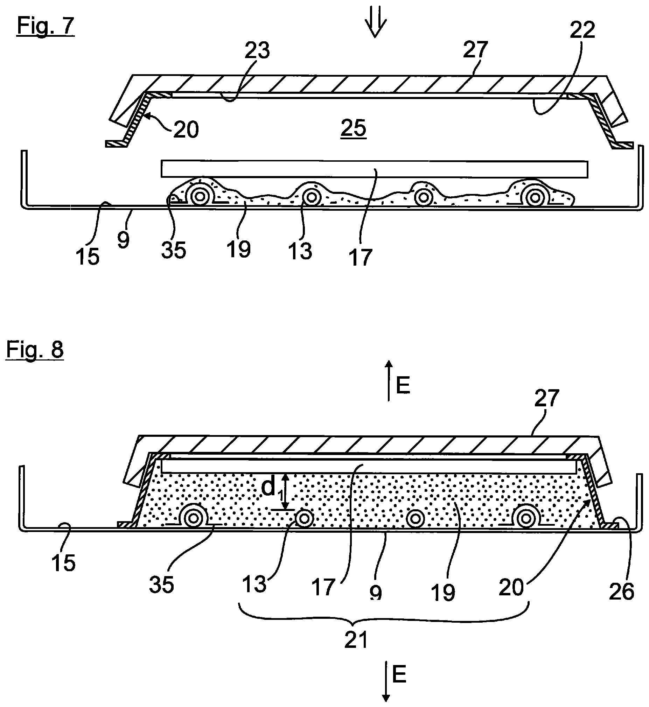

In dem, anhand der Fig. 3 bis 6 gezeigten Verfahren bleibt das Vakuumisolationspaneel 17 sowie das wannenförmige Trennmittel 20 dauerhaft ortsfest auf dem Boden 23 des Formwerkzeuges 27 positioniert. Demgegenüber ist in den Fig. 7 und 8 die Herstellung des Verbundkörpers 21 gemäß dem zweiten Ausführungsbeispiel dargestellt, bei dem das Vakuumisolationspaneel 17 beim Vorschäumen nicht ortsfest positioniert bleibt, sondern während des Vorschäumens nach oben gegen den Boden 22 des wannenförmigen Trennmittels 20 verlagert wird. Zunächst wird gemäß der Fig. 7 zur Vorbereitung des Vorschäum-Schrittes II auf die Innenseite 15 der Gehäuseaußenwand 9 das Flüssighaftmittel 19 in flüssiger Form aufgetragen. Das Flüssighaftmittel 19 kann dabei die ebenfalls auf der Innenseite 15 vorpositionierten Verflüssiger-Rohrleitungen 13 zumindest teilweise überdecken. Anschließend wird auf das noch flüssige Flüssighaftmittel 19 das Vakuumisolationspaneel 17 gelegt. Über dem noch losen Bauteilverbund, bestehend aus dem Vakuumisolationspaneel 17 und der Gehäuseaußenwand 9, wird das wannenförmige Trennmittel 20 mit Hilfe des Formwerkzeuges 27 schaumdicht gegen die Innenseite 15 der Gehäuseaußenwand 9 gedrückt. Dann erfolgt das Aufschäumen und Aushärten des Flüssighaftmittels 19. Anschließend können das Formwerkzeug 27 und die Gehäuseaußenwand 9 problemlos in den angedeuteten Entformungsrichtungen E voneinander getrennt werden.

### BEZUGSZEICHENLISTE

- 1: Kühlraum
- 3: Gehäuse
- 5: Gerätetür
- 7: Innenbehälter
- 9: Geräteaußenwand
- 11: Wärmeisolationsschicht
- 13: Verflüssiger
- 15: Innenseite
- 17: Vakuumisolationspaneel
- 19: Flüssighaftmittel
- 20: Trennmittel
- 21: Verbundkörper-Vormontageeinheit
- 22: Trennmittel-Boden
- 23: Kammerboden
- 24: Seitenwände
- 25: Schäumungskammer
- 26: Randsteg
- 27: Formwerkzeug
- 28: Durchtrittsöffnung
- 30: Stützabschnitt
- 32: Übergangskante
- 33: Randzone
- 25: Schäumungskammer
- 27: Formwerkzeug
- 29: Oberkante
- 31: Seitenwand
- 33: Randzone
- 35: Klebeband
- 37: Hohlraum
- d₁, d₂: Schichtdicken
- h: Kantenhöhe

## Patentansprüche

1. Kältegerät, insbesondere Haushaltskältegerät, mit einem einen Kühlraum (1) begrenzenden Gehäuse (3) und einer Gerätetür (5), die jeweils innere und äußere Begrenzungswände (7, 9) sowie eine zwischen diesen durch Aufschäumen erzeugte Wärmeisolationsschicht (11) aufweisen, in der ein Isolierelement, insbesondere ein Vakuumisolationspaneel (17), eingebracht ist, das mit einem Flüssighaftmittel (19) an einer der beiden Begrenzungswände (7, 9) befestigt ist, wobei, zumindest zwischen dem Flüssighaftmittel (19) und der Wärmeisolationsschicht (11) ein Trennmittel (20) vorgesehen ist, das das Flüssighaftmittel (19) schaumdicht von der Wärmeisolationsschicht (11) trennt, **dadurch gekennzeichnet, dass** das Flüssighaftmittel aufschäumbar ist.

2. Kältegerät nach Anspruch 1, **dadurch gekennzeichnet, dass** das Trennmittel (20) einen Rahmen (24) aufweist, der einen mit Flüssighaftmittel (19) gefüllten Zwischenraum (25) zwischen dem Vakuumisolationspaneel (17) und der ersten Begrenzungswand (9) seitlich begrenzt.

3. Kältegerät nach Anspruch 1 oder 2, **dadurch gekennzeichnet, dass** das Trennmittel (20) wannenförmig mit einem Boden (22) und randseitig hochgezogene Seitenwänden (24) ausgebildet ist, die als Rahmen den Zwischenraum (25) zwischen dem Vakuumisolationspaneel (17) und der ersten Begrenzungswand (9) seitlich begrenzen.

4. Kältegerät nach Anspruch 1, 2 oder 3, **dadurch gekennzeichnet, dass** die erste Begrenzungswand (9), das Vakuumisolationspaneel (17) und das Trennmittel (20) mit dem Flüssighaftmittel (19) zu einem Verbundkörper (21) beziehungsweise zu einer Vormontageeinheit zusammenfügbar sind.

5. Kältegerät nach Anspruch 3 oder 4, **dadurch gekennzeichnet, dass** das Vakuumisolationspaneel (17) in Anlage mit insbesondere der, der Begrenzungswand (9) zugewandten Seite des Bodens (22) des wannenförmigen Trennmittels (20) ist, und/oder um eine Schichtdicke (d₁) von der ersten Begrenzungswand (9) beabstandet ist.

6. Kältegerät nach einem der vorhergehenden Ansprüche, **dadurch gekennzeichnet, dass** das Trennmittel (20), insbesondere die Seitenwände (24) des wannenförmigen Trennmittels (20), in Anlage mit der ersten Begrenzungswand (9) ist.

7. Kältegerät nach einem der vorhergehenden Ansprüche, **dadurch gekennzeichnet, dass** in dem Zwischenraum (25) zwischen dem Vakuumisolationspaneel (17) und der ersten Begrenzungswand (9) eine Kältegerätekomponente (13), insbesondere ein Verflüssiger, angeordnet ist.

8. Kältegerät nach einem der vorhergehenden Ansprüche, **dadurch gekennzeichnet, dass** das Trennmittel (20), insbesondere der Boden (22) des wannenförmigen Trennmittels (20), zumindest eine Durchtrittsöffnung (28) für eine Halteverbindung zwischen dem Vakuumisolationspaneel (17) und der Wärmeisolierschicht (11) aufweist, und dass insbesondere die Durchtrittsöffnung (28) vom Vakuumisolationspaneel (17) überdeckt ist.

9. Verfahren zur Herstellung eines Kältegerätes, nach einem der vorhergehenden Ansprüche, in dem zur Vorbereitung eines Vorschäum-Schritts (II) das Vakuumisolationspaneel (17) in eine Schäumungskammer (25) eines Formwerkzeugs (27) gegeben wird, in der das Flüssighaftmittel (19) zur Befestigung des Vakuumisolationspaneels (17) an einer Begrenzungswand (9) aufgeschäumt wird, **dadurch gekennzeichnet, dass** die Schäumungskammer (25) über ein Trennmittel (20) vom Formwerkzeug schaumdicht getrennt wird.

10. Verfahren nach Anspruch 9, **dadurch gekennzeichnet, dass** das Trennmittel (20) im Vorschäum-Schritt (II) in Haftverbindung mit dem Flüssighaftmittel (19) gebracht wird.

11. Verfahren nach Anspruch 9 oder 10, **dadurch gekennzeichnet, dass** im Vorschäum-Schritt (II) das Formwerkzeug (27) außer Kontakt mit dem Flüssighaftmittel (19) verbleibt.

12. Verfahren nach einem der Ansprüche 9 bis 11, **dadurch gekennzeichnet, dass** zur Vorbereitung des Vorschäum-Schritts (II) das Vakuumisolationspaneel (17) unter Zwischenlage des Trennmittels (20) in das Formwerkzeug (27) gelegt wird und das Flüssighaftmittel (19) auf die vom Formwerkzeug (27).abgewandten Seite des Vakuumisolationspaneels (17) aufgetragen wird, und anschließend die Schäumungskammer (25) geschlossen wird, bis im Vorschäum-Schritt (II) das Flüssighaftmittel (19) aufgeschäumt und ausgehärtet ist.

13. Verfahren nach einem der Ansprüche 9 bis 12, **dadurch gekennzeichnet, dass** das Trennmittel (20) nach dem Vorschäum-Schritt (II) vom Verbundkörper (21) entfernt wird.

14. Verfahren nach einem der Ansprüche 9 bis 13, **dadurch gekennzeichnet, dass** dem Vorschäum-Schritt (II) ein Isolierschäum-Schritt (III) folgt, bei dem die zwischen der ersten und zweiten Begrenzungswand (7, 9) eingebrachte Wärmeisolationsschicht (11) aufgeschäumt und ausgehärtet wird.

## Claims

1. Refrigeration appliance, in particular domestic refrigeration appliance, with a housing (3) which delimits a refrigerating zone (1) and an appliance door (5), each of which having inner and outer delimiting walls (7, 9) as well as a thermal insulation layer (11) therebetween created by foaming, in which an insulating element, in particular a vacuum insulation panel (17), is introduced, which is fastened to one of the two delimiting walls (7, 9) using a liquid bonding agent (19), wherein there is provision for a separation means (20) at least between the liquid bonding agent (19) and the thermal insulation layer (11), which separates the liquid bonding agent (19) from the thermal insulation layer (11) in a foam-tight manner, **characterised in that** the liquid bonding agent can be foamed.

2. Refrigeration appliance according to claim 1, **characterised in that** the separation means (20) has a frame (24), which laterally delimits an intermediate zone (25) filled with liquid bonding agent (19) between the vacuum insulation panel (17) and the first delimiting wall (9).

3. Refrigeration appliance according to claim 1 or 2, **characterised in that** the separation means (20) is embodied in a tub-shaped manner with a base (22) and raised side walls (24) on the edge side, which laterally delimit the intermediate zone (25) between the vacuum insulation panel (17) and the first delimiting wall (9) as a frame.

4. Refrigeration appliance according to claim 1, 2 or 3, **characterised in that** the first delimiting wall (9), the vacuum insulation panel (17) and the separation means (20) can be assembled using the liquid bonding agent (19) to form a composite body (21) or a pre-assembly unit.

5. Refrigeration appliance according to claim 3 or 4, **characterised in that** the vacuum insulation panel (17) is in contact with, in particular, the side of the base (22) of the tub-shaped separation means (20) facing towards the delimiting wall (9), and/or is spaced apart from the first delimiting wall (9) by a layer thickness (d₁).

6. Refrigeration appliance according to one of the preceding claims, **characterised in that** the separation means (20), in particular the side walls (24) of the tub-shaped separation means (20), is in contact with the first delimiting wall (9).

7. Refrigeration appliance according to one of the preceding claims, **characterised in that** a refrigeration appliance component (13), in particular a condenser, is arranged in the intermediate zone (25) between the vacuum insulation panel (17) and the first delimiting wall (9).

8. Refrigeration appliance according to one of the preceding claims, **characterised in that** the separation means (20), in particular the base (22) of the tub-shaped separation means (20), has at least one passage opening (28) for a retaining connection between the vacuum insulation panel (17) and the thermal insulation layer (11), and that in particular the passage opening (28) is covered by the vacuum insulation panel (17).

9. Method for producing a refrigeration appliance according to one of the preceding claims, in which, to prepare a pre-foaming step (II), the vacuum insulation panel (17) is put into a foaming chamber (25) of a moulding tool (27), in which the liquid bonding agent (19) is foamed to fasten the vacuum insulation panel (17) to a delimiting wall (9), **characterised in that** the foaming chamber (25) is separated via a separation means (20) from the moulding tool in a foam-tight manner.

10. Method according to claim 9, **characterised in that** the separation means (20) is brought into a bonding connection with the liquid bonding agent (19) in the pre-foaming step (II).

11. Method according to claim 9 or 10, **characterised in that** the moulding tool (27) remains without coming into contact with the liquid bonding agent (19) in the pre-foaming step (II).

12. Method according to one of claims 9 to 11, **characterised in that**, to prepare the pre-foaming step (II), the vacuum insulation panel (17) is placed into the moulding tool (27) with the interposition of the separation means (20) and the liquid bonding agent (19) is applied to the side of the vacuum insulation panel (17) facing away from the moulding tool (27), and subsequently the foaming chamber (25) is closed, until the liquid bonding agent (19) is foamed and cured in the pre-foaming step (II).

13. Method according to one of claims 9 to 12, **characterised in that** the separation means (20) is at a distance from the composite body (21) following the pre-foaming step (II).

14. Method according to one of claims 9 to 13, **characterised in that** an insulation foaming step (III) following the pre-foaming step (II), in which the thermal insulation layer (11) introduced between the first and second delimiting wall (7, 9) is foamed and cured.

## Revendications

1. Appareil frigorifique, notamment appareil frigorifique à usage domestique, comprenant un boîtier (3) délimitant un espace de réfrigération (1) et une porte d'appareil (5), lesquels présentent respectivement des parois de délimitation intérieures et extérieures (7, 9) ainsi qu'une couche d'isolation thermique (11) créée par expansion entre celles-ci, dans laquelle est placé un élément isolant, notamment un panneau d'isolation sous vide (17), qui est fixé sur l'une des deux parois de délimitation (7, 9) à l'aide d'un agent adhésif liquide (19), un moyen de séparation (20) étant ménagé au moins entre l'agent adhésif liquide (19) et la couche d'isolation thermique (11), lequel moyen de séparation sépare l'agent adhésif liquide (19) de la couche d'isolation thermique (11) de manière étanche à la mousse, **caractérisé en ; ce que** l'agent adhésif liquide peut être expansé.

2. Appareil frigorifique selon la revendication 1, **caractérisé en ce que** le moyen de séparation (20) présente un cadre (24) qui délimite latéralement un espace intermédiaire (25), rempli d'agent adhésif liquide, entre le panneau d'isolation sous vide (17) et la première paroi de délimitation (9).

3. Appareil frigorifique selon la revendication 1 ou 2, **caractérisé en ce que** le moyen de séparation (20) est réalisé en formé de cuve avec un fond (22) et des parois latérales (24) étirées vers le haut côté bord, lesquelles, en tant que cadre, délimitent latéralement l'espace intermédiaire (25) entre le panneau d'isolation sous vide (17) et la première paroi de délimitation (9).

4. Appareil frigorifique selon les revendications 1, 2 ou 3, **caractérisé en ce que** la première paroi de délimitation (9), le panneau d'isolation sous vide (17) et le moyen de séparation (20) peuvent être assemblés en un corps composite (21), respectivement en une unité de pré-montage, à l'aide de l'agent adhésif liquide (19).

5. Appareil frigorifique selon la revendication 3 ou 4, **caractérisé en ce que** le panneau d'isolation sous vide (17) est appliqué contre le côté du fond (22) du moyen de séparation (20) en forme de cuve, tourné vers la paroi de délimitation (9), et/ou est distancé de la première paroi de délimitation (9) d'une épaisseur de couche (d₁).

6. Appareil frigorifique selon l'une quelconque des revendications précédentes, **caractérisé en ce que** le moyen de séparation (20), notamment les parois latérales (24) du moyen de séparation (20) en forme de cuve, est appliqué contre la première paroi de délimitation (9).

7. Appareil frigorifique selon l'une quelconque des revendications précédentes, **caractérisé en ce qu'**un composant d'appareil frigorifique (13), notamment un condenseur, est disposé dans l'espace intermédiaire (25) entre le panneau d'isolation sous vide (17) et la première paroi de délimitation (9).

8. Appareil frigorifique selon l'une quelconque des revendications précédentes, **caractérisé en ce que** le moyen de séparation (20), notamment le fond (22) du moyen de séparation (20) en forme de cuve, présente au moins une ouverture de passage (28) pour une liaison adhésive entre le panneau d'isolation sous vide (17) et la couche d'isolation thermique (11), et **en ce que** notamment l'ouverture de passage (28) est recouverte par le panneau d'isolation sous vide (17).

9. Procédé de fabrication d'un appareil frigorifique selon l'une quelconque des revendications précédentes, dans lequel, pour la préparation d'une étape de pré-expansion (II), le panneau d'isolation sous vide (17) est placé dans une chambre d'expansion (25) d'un outil de formage (27), dans laquelle l'agent adhésif liquide (19) est expansé sur une paroi de délimitation (9) pour la fixation du panneau d'isolation sous vide (17), **caractérisé en ce que** la chambre d'expansion (25) est séparée de l'outil de formage de manière étanche à la mousse par l'intermédiaire d'un moyen de séparation (20).

10. Procédé selon la revendication 9, **caractérisé en ce que** le moyen de séparation (20), à l'étape de pré-expansion (II), est mis en liaison d'adhérence avec l'agent adhésif liquide (19).

11. Procédé selon la revendication 9 ou 10, **caractérisé en ce que** l'outil de formage (27), à l'étape de pré-expansion (II), reste hors contact avec l'agent adhésif liquide (19).

12. Procédé selon l'une quelconque des revendications 9 à 11, **caractérisé en ce que** pour la préparation de l'étape de pré-expansion (II), le panneau d'isolation sous vide (17) est posé dans l'outil de formage (27) avec insertion intermédiaire du moyen de séparation (20), et **en ce que** l'agent adhésif liquide (19) est appliqué sur le côté du panneau d'isolation sous vide (17) détourné de l'outil de formage (27), et **en ce qu'**ensuite la chambre d'expansion (25) est fermée jusqu'à ce qu'à l'étape de pré-expansion (II) l'agent adhésif liquide (19) soit expansé et ait durci.

13. Procédé selon l'une quelconque des revendications 9 à 12, **caractérisé en ce que** le moyen de séparation (20) est retiré du corps composite (21) après l'étape de pré-expansion (II).

14. Procédé selon l'une quelconque des revendications 9 à 13, **caractérisé en ce qu'**une étape d'expansion de mousse isolante (III) succède à l'étape de pré-expansion (II), lors de laquelle la couche d'isolation thermique (11) appliquée entre la première et la deuxième parois de délimitation (7, 9) est expansée et durcie.
